# EUROPÄISCHE PATENTSCHRIFT

(11) **EP 3 376 827 B1**
(45) Veröffentlichungstag und Bekanntmachung des Hinweises auf die Patenterteilung: **03.03.2021**
(21) Anmeldenummer: 18161739.0
(22) Anmeldetag: 14.03.2018
(51) Int. Cl.: H05B 6/70, H05B 6/72

(54) **SYSTEM ZUR ZUBEREITUNG VON MINDESTENS EINEM NAHRUNGSMITTEL**
SYSTEM FOR THE PREPARATION OF AT LEAST ONE FOODSTUFF
SYSTÈME DE PRÉPARATION D'AU MOINS UNE DENRÉE ALIMENTAIRE

(30) Priorität: 14.03.2017 DE 102017105320
(43) Veröffentlichungstag der Anmeldung: 19.09.2018
(73) Patentinhaber: Vorwerk & Co. Interholding GmbH, 42270 Wuppertal (DE)
(72) Erfinder: KOETZ, Hendrik, 58300 Wetter (DE)
(74) Vertreter: Patentanwälte Bals & Vogel

(56) Entgegenhaltungen:
- EP-A1- 2 051 563
- EP-A1- 2 233 838
- JP-A- H09 102 390
- JP-A- 2000 348 858
- JP-A- 2002 289 338
- JP-A- 2008 281 283

## Beschreibung

Die vorliegende Erfindung betrifft ein System zur Zubereitung von mindestens einem Nahrungsmittel gemäß dem unabhängigen Vorrichtungsanspruch. Ferner bezieht sich die Erfindung auf ein Verfahren zur Zubereitung von mindestens einem Nahrungsmittel gemäß dem unabhängigen Verfahrensanspruch.

Aus dem Stand der Technik sind verschiedene Systeme zur Zubereitung von Nahrungsmitteln bekannt. Backöfen z. B. erhitzen das Gargut in der Regel mit einer metallischen Heizspirale, welche von Strom durchflossen wird und somit Wärme abstrahlen kann. Mikrowellenherde hingegen verwenden einen Magnetron zur Erzeugung hochfrequenter elektromagnetischer Strahlung, welche das Gargut durchdringt und die im Gargut enthaltenen atomaren Dipole in Rotation versetzt. Durch die Rotation kann sich die kinetische Energie des Wassers im Gargut und somit die Temperatur des Garguts erhöhen. Die Dokumente EP 2 233 838 A1, EP 2 051 563 A1, JP 2000 348858 A, JP2002 290338 A, JP 2008 281283 A und JP H09 102390 A offenbaren Mikrowellenofen nach dem Stand der Technik.

Hierbei ist ein Nachteil, dass oft nur eine statische Energie- bzw. Temperaturverteilung erzeugt werden kann. So nutzt bspw. eine herkömmliche Mikrowelle das Magnetron, um elektromagnetische Energie auszustrahlen. Diese elektromagnetische Energie, insbesondere zumindest eine elektromagnetische Welle, weist eine statische Frequenz und eine statische Phase aus, wodurch es zu unterschiedlich stark ausgeprägten Temperaturzonen innerhalb des Garraums kommt. Um dennoch das Gargut möglichst gleichmäßig zu erhitzen, wird dabei oft ein Drehteller verwendet, um so die erzeugte statische Energieverteilung im Gargut zu verteilen. Aufgrund der reflektiven Eigenschaften der Kavität, d. h. des Garraums, und der relativ großen Entfernungen, welche die elektromagnetischen Wellen vom Magnetron in das Gargut überwinden müssen, kommt es zu relativ großen Leistungseinbußen, insbesondere im Verlauf der Ausbreitung durch Streuung und/oder Reflektion und/oder Absorption der Wellen. Weiter kann die Feldverteilung der elektromagnetischen Wellen im Garraum nur unzureichend angepasst werden, sodass es zu einer ungleichmäßigen Temperaturverteilung im Garraum und/oder im Gargut und damit zu einem Energieverlust und unzureichenden Garergebnissen kommt.

Insbesondere bei dem Backofen ist das metallische Heizelement unterhalb des Deckenelements des Garraums angebracht, wohingegen das Gargut sich in der Regel oberhalb des Bodenelements befindet. Es muss daher eine relativ große Distanz zum Gargut durch die Wärmestrahlung bewältigt werden. Entsprechend wird ein großes Volumen erhitzt, welches nicht durch das Gargut erfüllt wird, sodass es auch hier zu einem Energieverlust und einer unzureichenden Zubereitung kommt.

Ein weiterer Nachteil ist, dass unterschiedliche Nahrungsmittel im Garraum unterschiedlich schnell erhitzt werden, sodass auch hier die Zubereitung nicht zufriedenstellend erfolgen kann, da es teilweise zu einer Überhitzung und teilweise zu einer unzureichenden Aufwärmung beim Gargut kommen kann.

Insbesondere ist es daher eine Aufgabe der vorliegenden Erfindung, die voranstehend beschriebenen Nachteile zumindest teilweise zu beheben. Insbesondere ist es eine Aufgabe der vorliegenden Erfindung, Nahrungsmittel, d. h. insbesondere Gargut, gleichmäßiger und/oder mit geringeren Leistungsverlusten erhitzen zu können. Vorzugsweise ist eine Aufgabe, dass bestimmte Bereiche im Garraum (d. h. der Kavität) unterschiedlich stark bzw. individuell erhitzt werden können, falls dies gewünscht ist, und somit Hotspots im Garraum erzeugt werden können.

Die voranstehende Aufgabe wird gelöst durch ein System mit den Merkmalen des Hauptanspruchs und durch ein Verfahren mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Die Aufgabe wird gelöst durch ein System zur Zubereitung von mindestens einem Nahrungsmittel (gemeint ist das Gargut / aufzuwärmende Gut), insbesondere zum Erwärmen von dem mindestens einen Nahrungsmittel.

Erfindungsgemäß umfasst das erfindungsgemäße System zumindest:
- einen Garraum, in welchem mindestens ein Zubereitungsort vorgesehen ist, wobei insbesondere an dem Zubereitungsort das Nahrungsmittel positionierbar und/oder zubereitbar, insbesondere erhitzbar und/oder garbar, ist, und/oder
- wenigstens eine Antennenanordnung zur Energiezuführung, insbesondere durch Abstrahlung, von elektromagnetischer Energie in den Garraum, insbesondere zu dem wenigstens einen Zubereitungsort, wodurch das Nahrungsmittel, insbesondere für die Zubereitung, erhitzbar und/oder garbar und/oder zubereitbar ist, und/oder
- wenigstens eine Aussendevorrichtung zum Betreiben der Antennenanordnung.

Hierbei ist vorgesehen, dass zumindest eine Antenne der Antennenanordnung in Abhängigkeit von dem wenigstens einen Zubereitungsort ausgerichtet ist und durch die wenigstens eine Aussendevorrichtung gemäß mindestens einer Betriebsart betreibbar ist, sodass vorzugsweise eine (insbesondere leistungsoptimierte) Temperaturzonenverteilung, insbesondere im Garraum und/oder im Gargut und/oder am Zubereitungsort, zur Erhitzung und/oder Zubereitung des mindestens einen Nahrungsmittels erzeugbar ist, sodass bevorzugt Leistungsverluste reduzierbar sind. Dies hat den Vorteil, dass eine Energieeinsparung möglich ist, und insbesondere die Zubereitung des Nahrungsmittels besonders einfach angepasst und optimiert werden kann. Die Ausrichtung der Antenne in Abhängigkeit von dem Zubereitungsort erfolgt insbesondere dadurch, dass die Antenne so befestigt und/oder ausgerichtet wird, dass die Abstrahlung der elektromagnetischen Energie durch die Antenne in eine bestimmte Richtung, insbesondere in Richtung des Zubereitungsorts, erfolgt und/oder darauf konzentriert ist.

Insbesondere kann es möglich sein, dass durch
- eine Veränderung der Ausrichtung der wenigstens einen Antenne und/oder
- eine Veränderung der Betriebsart für die Antennenanordnung bzw. für die wenigstens eine Antenne
wenigstens eine (insbesondere vorgegebene und/oder angepasste) Energie-, insbesondere Temperatur(zonen)verteilung, insbesondere im Garraum und/oder im Gargut (d. h. dem zu erhitzenden Nahrungsmittel), erzeugt werden kann. Die Ausrichtung kann bspw. dadurch verändert werden, dass die wenigstens eine Antenne, insbesondere die einzelnen Antennen jeweils individuell, bewegt und/oder ausgerichtet wird (z. B. auf einen Hotspot). Alternativ oder zusätzlich kann die oder wenigstens eine der Antenne(n) und/oder kann jede der Antennen auch unbeweglich ausgeführt sein, sodass keine Veränderung der Ausrichtung möglich ist. Weiter ist es möglich, dass die Veränderung der Betriebsart bspw. dadurch bewirkt wird, dass eine Leistung und/oder Frequenz und/oder Phase zum Betreiben der wenigstens einen Antenne bzw. für jede Antenne individuell angepasst wird. Hierdurch kann die Temperaturverteilung angepasst werden, sodass unterschiedliche Temperaturverteilungen erzeugt werden können.

Mögliche Energie- bzw. Temperaturverteilungen (d. h. insbesondere Temperaturzonenverteilungen), welche, insbesondere im Garraum und/oder im Gargut und/oder am Zubereitungsort, durch Nutzung der Antennenanordnung erzeugt werden können, sind bspw.:
- eine homogene Energie- bzw. Temperatur(zonen)verteilung, sodass benachbarte Bereiche im Wesentlichen gleichmäßig erhitzt werden können,
- eine inhomogene Energie- bzw. Temperatur(zonen)verteilung, sodass benachbarte Bereiche unterschiedlich stark erhitzt werden können, und insbesondere Hotspots entstehen können.

Insbesondere ist die Energie- bzw. Temperatur(zonen)verteilung dynamisch und kann im Gegensatz zu einer statischen Energie- bzw. Temperaturverteilung während des Betriebs des erfindungsgemäßen Systems verändert werden. Die Temperaturverteilung korreliert dabei insbesondere mit der (Energie-)Verteilung der durch die Antennenanordnung zugeführten und insbesondere ausgestrahlten Energie, insbesondere Strahlung, sodass durch eine Anpassung dieser Energieverteilung die gewünschte Temperaturverteilung erzeugt werden kann, vorzugsweise in Abhängigkeit bzw. unter Berücksichtigung des wenigstens einen zu erhitzenden Nahrungsmittels im Garraum. Hierzu können bspw. auch weitere Informationen, insbesondere über das Nahrungsmittel und/oder die Temperatur im Garraum und/oder Gargut, herangezogen werden, bspw. über eine Benutzereingabe und/oder über eine Messung, wie einer Temperaturmessung.

Unter einer leistungsoptimierten Temperaturzonenverteilung wird dabei insbesondere verstanden, dass eine an das mindestens eine Nahrungsmittel und/oder an den Zubereitungsort angepasste Temperaturzonenverteilung und/oder Energiezonenverteilung erzeugt wird. Dabei ist vorzugsweise die leistungsoptimierte Temperaturzonenverteilung, insbesondere während des Betriebs des erfindungsgemäßen Systems und/oder aufgrund der auf den Zubereitungsort angepassten Anordnung der Antennenanordnung, veränderbar und/oder anpassbar und/oder leistungsoptimiert, um das zumindest eine Nahrungsmittel vorzugsweise derart zu erhitzen, dass Leistungsverluste (z. B. durch eine ungleichmäßige Temperaturverteilung oder eine ungleichmäßige Energiezuführung, insbesondere in Bereiche ohne Gargut) reduziert werden können. Hierzu ist bspw. auch eine Anordnung der Antennenanordnung besonders nahe am Zubereitungsort denkbar.

Insbesondere kann es möglich sein, dass das Betreiben vorzugsweise gemäß der mindestens einen Betriebsart ein Ansteuern, insbesondere auch ein Regeln, von Betriebsparametern für die Antennenanordnung umfasst. Diese Betriebsparameter sind bspw. eine Leistung und/oder eine Frequenz und/oder Phase, bspw. eines elektrischen Spannungssignals, mit welcher die Antennenanordnung, insbesondere die einzelnen Antennen, betrieben werden. Insbesondere umfasst hierzu die Aussendevorrichtung zumindest einen Hochfrequenz-Signalgeber und/oder zumindest ein Magnetron, insbesondere zur Ausgabe des Spannungssignals an die wenigstens eine Antenne.

Ferner kann es vorgesehen sein, dass die Temperaturzonenverteilung durch die Antennenanordnung als eine dynamische Temperaturzonenverteilung erzeugbar ist, sodass die Temperaturzonenverteilung, insbesondere im Garraum, insbesondere durch den Betrieb der Antennenanordnung, veränderbar und/oder an das Nahrungsmittel am Zubereitungsort oder an weitere Nahrungsmittel an jeweiligen Zubereitungsorten anpassbar ist und/oder an eine vorgegebene Temperaturzonenverteilung anpassbar ist, insbesondere zur leistungsoptimierten, vorzugsweise homogenen, insbesondere internen, Erhitzung der jeweiligen Nahrungsmittel. Selbstverständlich ist es auch denkbar, dass eine inhomogene Erhitzung des jeweiligen Nahrungsmittels erzeugt wird, um bspw. bestimmte Bereiche des einzelnen Nahrungsmittels stärker zu erhitzen als andere Bereiche dieses Nahrungsmittels. Die Erhitzung und/oder die Temperatur(zonen)verteilung kann sich dabei bspw. auf ein einzelnes Nahrungsmittel beziehen, sodass hierunter eine interne Erhitzung bzw. Temperaturverteilung des Nahrungsmittels verstanden wird, und/oder auch auf die Erhitzung mehrerer Nahrungsmittel im Garraum beziehen. Bspw. kann somit die Temperaturzonenverteilung auch an ein bestimmtes Gericht und/oder eine bestimmte Zubereitungsart, insbesondere auch benutzerspezifisch, angepasst werden.

Es kann optional möglich sein, dass die Antennenanordnung mindestens zwei Antennen umfasst, welche beabstandet voneinander angeordnet sind, und welche durch die Aussendevorrichtung oder jeweils durch separate Aussendevorrichtungen betreibbar sind, wobei die Antennen unterschiedlich ausgeführt sind, insbesondere unterschiedliche Ausrichtungen aufweisen und/oder gemäß unterschiedlichen Betriebsarten betreibbar sind und/oder gemäß unterschiedlichen Antennenbauformen ausgebildet sind, wodurch die Temperaturzonenverteilung in Abhängigkeit von der unterschiedlichen Ausführung der Antennen erzeugbar ist. Insbesondere kann dabei die Ausrichtung und/oder Betriebsart der jeweiligen Antennen auch veränderbar und/oder steuerbar und/oder regelbar sein. Insbesondere erfolgt dabei der Betrieb, insbesondere die Ansteuerung, der jeweiligen Antennen durch die zumindest eine Aussendevorrichtung derart, dass der Betrieb einer ersten Antenne in Abhängigkeit von dem Betrieb einer zweiten Antenne erfolgt, sodass eine Synergiewirkung der Antennen untereinander genutzt werden kann. Bspw. können Interferenzeffekte oder dergleichen genutzt werden, um durch die angepasste Ansteuerung der Antennen eine angepasste Temperaturzonenverteilung und/oder Hotspots zu erzeugen.

Vorteilhafterweise kann im Rahmen der Erfindung vorgesehen sein, dass die Antennenanordnung zumindest eine erste Antenne und eine zweite Antenne aufweist, welche beabstandet voneinander angeordnet sind, und insbesondere welche gemäß unterschiedlichen Antennenbauformen ausgeführt sind, wobei insbesondere die Antennenbauformen wenigstens eine der folgenden Bauformen umfassen:
- eine Dipolantenne, vorzugsweise bei welcher eine Richtcharakteristik abhängig ist von einer Stromverteilung über eine Länge eines elektrischen Leiters der Dipolantenne,
- eine Monopolantenne, insbesondere Stabantenne, vorzugsweise bei welcher eine um eine vertikale Achse der Monopolantenne rotationssymmetrische Feldverteilung erfolgt,
- eine zirkular polarisierte Antenne, welche insbesondere als ein Kreuzdipol ausgeführt ist und/oder eine Anordnung mit zwei Antennenteilen aufweist, welche um 90° versetzt angeordnet und/oder um 90° phasenverschoben speisbar und/oder linear polarisiert betreibbar sind.

Vorzugsweise kann die zirkularpolarisierte Antenne dabei eine stark homogene Temperaturverteilung (Temperaturzonenverteilung) erzeugen, da sich die Feldverteilung der elektromagnetischen Wellen stetig ändert und es so zu einer stark wechselnden Durchdringung des Garguts (des Nahrungsmittels) kommt. Insbesondere Interferenzmuster können hierdurch reduziert werden. Hingegen können insbesondere Dipolantennen aufgrund ihrer Richtcharakteristik gezielt Hotspots im Gargut erzeugen. Bevorzugt kann dabei die Antennenanordnung derart ausgeführt und/oder betrieben werden, dass Interferenzmuster gezielt erzeugt oder aber auch, bspw. überwiegend, vermieden werden. Hierdurch ist eine deutliche Energieersparnis möglich.

Insbesondere kann es vorgesehen sein, dass zur Erzeugung einer möglichst homogenen Temperatur(zonen)verteilung, insbesondere im Garraum und/oder im Gargut, wenigstens eine zirkular polarisierte Antenne vorgesehen ist und/oder zur Erzeugung einer möglichst konzentrierten Temperaturverteilung (Hotspots), insbesondere im Garraum und/oder im Gargut, zumindest eine Dipolantenne vorgesehen ist. Zirkular polarisierte Antennen erzeugen eine stark homogene Temperaturverteilung, da sich die Feldverteilung der elektromagnetischen Wellen stetig ändert und es so zu einer stark wechselnden Durchdringung des Garguts kommen kann und/oder Interferenzmuster vermieden werden. Hingegen können Dipolantennen aufgrund ihrer Richtcharakteristik dazu verwendet werden, um gezielt Hotspots im Garraum und/oder im Gargut zu erzeugen. Das Gargut ist dabei insbesondere das zu erhitzende Nahrungsmittel im Garraum.

Insbesondere wird unter der Energie- bzw. Temperaturverteilung eine Temperaturzonenverteilung verstanden.

Es kann im Rahmen der Erfindung vorgesehen sein, dass die Antenne oder zumindest eine der Antennen der Antennenanordnung zumindest teilweise als eine Kupferantenne ausgeführt ist und/oder zumindest teilweise Kupfer oder dergleichen aufweist. Insbesondere ist hierbei der Vorteil, dass Kupfer eine antibakterielle Wirkung aufweist, sodass eine schonende und gesunde Zubereitung des zumindest einen Nahrungsmittels ermöglicht werden kann.

Vorzugsweise kann es möglich sein, dass die Antennenanordnung unbeweglich ausgeführt ist, und insbesondere somit ohne bewegliche Teile auskommt. Alternativ oder zusätzlich ist es denkbar, dass verschiedene Temperaturverteilungen, insbesondere im Garraum und/oder im Gargut, dadurch erzeugt werden, dass die Antennenanordnung in Bezug auf die zum Betrieb verwendete Leistung und/oder Frequenz und/oder Phase angepasst wird. Somit können bspw. auch Hotspots in unterschiedlichen Bereichen erzeugt werden, ohne die Antennenanordnung bewegen zu müssen. Dies ermöglicht eine sehr platzsparende und kompakte Bauform der Antennenanordnung.

Auch ist es denkbar, dass zumindest zwei verschiedene Zubereitungsorte vorgesehen sind, und verschiedene Antennen der Antennenanordnung derart angeordnet, insbesondere ausgerichtet, und/oder betreibbar sind, dass den verschiedenen Zubereitungsorten ein unterschiedliches Ausmaß Energie zuführbar ist, sodass Nahrungsmittel an den jeweiligen Zubereitungsorten kontrolliert erhitzbar sind, insbesondere jeweils gleichmäßig oder in vorbestimmter Weise, insbesondere unterschiedlich, erhitzbar sind. Bevorzugt betrifft dabei die gleichmäßige oder in vorbestimmter Weise durchgeführte Erhitzung den gesamten Garraum oder die jeweiligen Zubereitungsorte oder das jeweilige Gargut (Nahrungsmittel). Mit anderen Worten kann eine gleichmäßige Temperaturzonenverteilung sich gleichmäßig über den gesamten Garraum oder über zumindest einen der Zubereitungsorte oder über das einzelne Gargut erstrecken. Selbstverständlich gilt gleiches für eine ungleichmäßige (inhomogene) Temperaturzonenverteilung und/oder auch für eine Temperaturzonenverteilung in vorbestimmter Weise.

Vorteilhaft ist es zudem, wenn die Antennenanordnung eine Vielzahl von Antennen aufweist, sodass durch die Antennen eine feingranulare Temperaturverteilung bewirkbar ist, wobei vorzugsweise mindestens 3 oder mindestens 5 oder mindestens 10 oder mindestens 20 Antennen vorgesehen sind. Die feingranulare Temperaturverteilung, insbesondere Temperaturzonenverteilung, kann insbesondere im Bereich des Garraums und/oder des Garguts und/oder im Bereich zumindest einer der Zubereitungsorte bewirkt werden. Vorzugsweise können die Antennen hierzu nebeneinander und/oder in einer Matrixstruktur, insbesondere in einem Bodenelement, angeordnet werden. Dies ermöglicht eine einfache und kostengünstig herzustellende Antennenanordnung zur Erzeugung der feingranularen Temperaturverteilung, um eine gleichmäßige Erhitzung der Nahrungsmittel durchführen zu können.

Des Weiteren kann es vorgesehen sein, dass das System ein Deckenelement und ein Bodenelement, insbesondere einen Boden oder ein Einschubelement, umfasst, wobei insbesondere das Bodenelement dem Deckenelement gegenüberliegend angeordnet ist, und vorzugsweise der Garraum zumindest teilweise durch das Bodenelement und durch das Deckenelement begrenzt wird, und wobei insbesondere die Antennenanordnung im Bereich des Bodenelements angeordnet ist, vorzugsweise unterhalb des Bodenelements, wobei insbesondere das Bodenelement zwischen der Antennenanordnung und dem Garraum angeordnet ist. Insbesondere ist dabei die Antennenanordnung, vorzugsweise zumindest eine der Antennen der Antennenanordnung, im Bodenelement integriert. Dies hat den Vorteil, dass der Abstand zwischen der Antennenanordnung und dem Nahrungsmittel reduziert werden kann. Hierdurch ist eine deutliche Energieeinsparung möglich. Alternativ oder zusätzlich kann es daher auch möglich sein, dass zumindest ein Heizelement im Bodenelement und/oder integriert ist.

Bevorzugt kann es möglich sein, dass das Bodenelement als ein Einschubelement und/oder als ein Aufnahmemittel für das Nahrungsmittel ausgeführt ist und insbesondere in den Garraum in unterschiedlichen Höhen des Garraums (bspw. mit unterschiedlichen Abständen zum Deckenelement und/oder zum Boden des Systems) einbringbar und/oder befestigbar und/oder führbar und/oder einschiebbar ist. Vorzugsweise wird dabei der Garraum durch das Deckenelement und den Boden begrenzt, wobei das Bodenelement mit einem bestimmten Abstand bzw. beabstandet zum Deckenelement und/oder zum Boden angeordnet ist. Dies ermöglicht eine besonders einfache und kostengünstige Ausgestaltung des Garraums.

Bevorzugt ist es vorgesehen, dass das Bodenelement als der Boden eines Ofens oder als ein Backblech oder dergleichen ausgeführt ist, welches zum Einschieben in den Garraum und/oder zur Aufnahme des Nahrungsmittels dient.

Insbesondere ist das Bodenelement unterhalb des Deckenelements im erfindungsgemäßen System angeordnet, wobei sich die Richtungsangabe "unterhalb" auf den Gebrauchs- bzw. Betriebszustand des erfindungsgemäßen Systems bezieht. Entsprechend ist das Bodenelement im Betriebszustand des erfindungsgemäßen Systems näher an einer Aufstellfläche für das erfindungsgemäße System angeordnet als das Deckenelement (wobei die Aufstellfläche bspw. einen Fußboden z. B. in einer Küche oder dergleichen bezeichnet).

Gemäß einem weiteren Vorteil kann vorgesehen sein, dass die Antennenanordnung einen geringeren Abstand zum Zubereitungsort aufweist als ein Deckenelement des Systems, wobei vorzugsweise der Abstand zwischen der Antennenanordnung und dem Zubereitungsort maximal 1 cm oder maximal 4 cm oder maximal 6 cm oder maximal 10 cm beträgt und bevorzugt die Antennenanordnung als eine erste Heizvorrichtung einen geringeren Abstand zum Zubereitungsort aufweist als weitere Heizvorrichtungen des Systems, insbesondere sodass Reflektionen und/oder Streuungen der elektromagnetische Energie aufgrund des geringen Abstands bis zum Auftreffen auf das Nahrungsmittel reduzierbar sind. Selbstverständlich kann es auch möglich sein, dass zumindest eine der weiteren Heizvorrichtungen einen ähnlichen geringen Abstand zum Zubereitungsort aufweist wie die erste Heizvorrichtung. Selbstverständlich können als weitere Heizvorrichtungen auch weitere Antennenanordnungen vorgesehen sein.

Nach einer weiteren Möglichkeit kann vorgesehen sein, dass ein Bodenelement des Systems zumindest teilweise nichtmetallisch ausgebildet ist und/oder für die elektromagnetische Energie, insbesondere elektromagnetische Strahlung, durchdringbar ausgeführt ist, vorzugsweise sodass die elektromagnetische Energie ausgehend von der Antennenanordnung durch das Bodenelement in den Garraum gelangen kann, wobei vorzugsweise das Bodenelement überwiegend Keramik und/oder Glas aufweist und/oder daraus hergestellt ist und/oder zumindest teilweise oder überwiegend aus einem nichtmetallischen Material hergestellt ist. Dies hat den Vorteil, dass der Energieverbrauch für die Zubereitung deutlich reduziert werden kann.

Außerdem ist es von Vorteil, wenn neben der Antennenanordnung eine weitere Heizvorrichtung vorgesehen ist, vorzugsweise im Bereich eines Deckenelements des Systems, wobei die weitere Heizvorrichtung wenigstens eine Heizspirale und/oder Elektroheizung und/oder ein Magnetron umfasst, welche insbesondere am Deckenelement befestigt ist. Insbesondere können durch die Heizvorrichtung und/oder durch die Antennenanordnung sehr flexibel und dynamisch Temperaturzonen, insbesondere im Garraum und/oder im Gargut, erzeugt werden. Vorzugsweise kann durch eine Anpassung der Feldverteilung der elektromagnetischen Strahlung, welche durch die Antennenanordnung ausgestrahlt wird, eine gleichmäßige Temperaturverteilung erzeugt werden. Selbstverständlich kann es auch möglich sein, dass die weitere Heizvorrichtung auch im Bodenelement angeordnet ist, sodass eine besonders effiziente Erhitzung des Garguts erfolgen kann. Insbesondere ist durch die weitere Heizvorrichtung bspw. eine Grillfunktion realisierbar, um das Nahrungsmittel anzubraten. Die weitere Heizvorrichtung kann dabei bspw. eine Elektroheizung umfassen.

Insbesondere kann es möglich sein, dass eine Feldverteilung von elektromagnetischer Energie, insbesondere Strahlung, durch die Antennenanordnung derart angepasst wird, dass eine an das wenigstens eine Nahrungsmittel angepasste Temperaturverteilung erfolgt. So können bspw. unterschiedliche, verschiedenartige Nahrungsmittel, insbesondere im Garraum, vorhanden sein, z. B. Fisch mit Beilage und Gemüse oder dergleichen. Diese Nahrungsmittel weisen in der Regel Unterschiede in Bezug auf die Größe und Gewicht und dergleichen auf, sodass sie sich unterschiedlich schnell erwärmen. Durch die angepasste Temperaturverteilung kann dann eine gewünschte, bspw. eine angepasste und gleichmäßige, Erhitzung ermöglicht werden. Hierzu können auch sogenannte Hotspots zum Einsatz kommen, welche eine räumlich eingrenzte Konzentration der Temperaturverteilung ermöglichen.

Von weiterem Vorteil kann vorgesehen sein, dass das System als Ofen, insbesondere Backofen, oder Mikrowelle oder dergleichen ausgeführt ist. Insbesondere ist es bei der Mikrowelle denkbar, dass die Mikrowellenstrahlung durch die Antennenanordnung und/oder durch ein Magnetron ausgestrahlt wird.

Ebenfalls Gegenstand der Erfindung ist ein Verfahren zur Zubereitung von mindestens einem Nahrungsmittel, wobei in einem Garraum an mindestens einem Zubereitungsort das Nahrungsmittel positioniert wird und/oder zubereitet wird.

Hierbei ist insbesondere vorgesehen, dass für die Zubereitung des mindestens einen Nahrungsmittels zumindest einer der nachfolgenden Schritte vorgesehen ist, wobei insbesondere die Schritte nacheinander oder in beliebiger Reihenfolge durchgeführt werden können, und bevorzugt einzelne Schritte auch wiederholt durchgeführt werden können:
a) Ausrichten zumindest einer Antenne einer Antennenanordnung in Abhängigkeit von dem Zubereitungsort,
b) Betreiben der Antenne gemäß mindestens einer Betriebsart durch eine Aussendevorrichtung, sodass elektromagnetische Energie in den Garraum zugeführt wird, wodurch eine leistungsoptimierte Temperaturzonenverteilung, insbesondere im Garraum, zur Erhitzung des Nahrungsmittels erzeugt wird.

Damit bringt das erfindungsgemäße Verfahren die gleichen Vorteile mit sich, wie sie ausführlich mit Bezug auf ein erfindungsgemäßes System beschrieben worden sind. Zudem kann das erfindungsgemäße Verfahren geeignet sein, ein erfindungsgemäßes System zu betreiben.

In einer weiteren Möglichkeit kann vorgesehen sein, dass die elektromagnetische Energie eine hochfrequente elektromagnetische Strahlung im Mikrowellenbereich und/oder in einem Frequenzbereich ist, welcher zur Erhitzung von Nahrungsmittel geeignet ist. Insbesondere wird die elektromagnetische Energie als elektromagnetische Welle in den Garraum abgestrahlt. Insbesondere kann es vorgesehen sein, dass die Strahlung das Nahrungsmittel, insbesondere das Gargut, vollständig durchdringt. Hierzu kann bspw. als ein Kriterium für die Wahl des Frequenzbereichs angenommen werden, dass das Nahrungsmittel Wasser ist oder aufweist. Dies ermöglicht einen einfachen und zuverlässigen Betrieb der Antennenanordnung zur Zubereitung des Nahrungsmittels.

Vorteilhafterweise kann im Rahmen der Erfindung vorgesehen sein, dass zumindest zwei verschiedene Zubereitungsorte vorgesehen sind, und verschiedene Antennen der Antennenanordnung derart angeordnet, insbesondere ausgerichtet, und/oder betrieben werden, dass den verschiedenen Zubereitungsorten jeweils ein unterschiedliches Ausmaß an Energie zugeführt wird, wobei die jeweiligen unterschiedlichen Ausmaße der Energie in Abhängigkeit von Bedingungen, welche für die Nahrungsmittel an den jeweiligen Zubereitungsorten spezifisch sind, derart reguliert werden, dass die Nahrungsmittel gemäß einer Vorgabe, insbesondere gleichmäßig, erhitzt werden können. Bspw. können diese Bedingungen eine Größe und/oder ein Gewicht der jeweiligen Nahrungsmittel und/oder eine Art des jeweiligen Nahrungsmittels sein, welche sich bspw. auch voneinander für unterschiedliche Nahrungsmittel unterscheiden können, sodass sich die Nahrungsmittel bei gleicher Energiezufuhr unterschiedlich schnell erwärmen können. Die Vorgabe kann dabei insbesondere eine vorgegebene Temperaturverteilung und/oder ein vorgegebenes Garverhalten und/oder ein gewünschter Garvorgang sein. Insbesondere kann die Vorgabe dadurch bestimmt werden, dass eine Benutzereingabe ausgewertet wird.

Es ist erfindungsgemäß vorgesehen, dass der Betrieb von zumindest zwei Antennen der Antennenanordnung mit unterschiedlichen Betriebsarten erfolgt, welche sich hinsichtlich einer Leistung und/oder einer Frequenz und/oder einer Phase (d. h. der elektromagnetischen Welle und/oder der elektrischen Spannung) und/oder einer zyklischen Ein- und Ausschaltung, mit welcher die jeweiligen Antennen der Antennenanordnung betrieben werden, unterscheiden, sodass vorzugsweise eine vorgegebene Temperaturzonenverteilung, insbesondere im Garraum, erzeugt wird, vorzugsweise mit einer homogenen oder inhomogenen Temperaturverteilung. Dabei dient die inhomogene Temperaturverteilung insbesondere zur Erzeugung von Hotspots, sodass eine besonders flexible Zubereitung der Nahrungsmittel erfolgen kann. Die Frequenz ist dabei insbesondere die Sendefrequenz der Antennen und/oder die Frequenz der ausgesendeten Strahlung der jeweiligen Antennen. Insbesondere kann das Ein- und/oder Ausschalten z. B. durch einen Pulsbetrieb der Antennen, insbesondere durch eine Pulsweitenmodulation, und/oder Phasenmodulation erfolgen.

Ferner kann im Rahmen der Erfindung vorgesehen sein, dass der Betrieb der Antennenanordnung durch eine Kontrolleinheit angepasst wird, sodass in Abhängigkeit von Bedingungen, welche durch die Kontrolleinheit ausgewertet werden, eine vorgegebene Temperaturzonenverteilung, insbesondere im Garraum und/oder im Gargut, erzeugt wird. Insbesondere können die Bedingungen die Vorgaben und/oder Benutzereingaben und/oder Messergebnisse umfassen. Hierdurch ist eine besonders energiesparende und effiziente Nahrungsmittelzubereitung möglich.

Ferner ist es denkbar, dass zur Erzeugung einer vorgegebenen Temperaturzonenverteilung, insbesondere im Garraum, die Energiezuführung für unterschiedliche Zubereitungsorte des Garraums unterschiedlich durchgeführt wird, sodass
- zumindest zwei unterschiedliche Temperaturzonen mit jeweils unterschiedlicher Temperatur, insbesondere im Garraum, für unterschiedliche Zubereitungsorte bewirkt werden, sodass insbesondere Nahrungsmittel an unterschiedlichen Zubereitungsorten ungleichmäßig erhitzt werden, insbesondere gemäß einer ersten, insbesondere inhomogenen, Temperaturzonenverteilung, oder
- eine einzige Temperaturzone für eine homogene Temperaturverteilung, insbesondere im Garraum und/oder Gargut, bewirkt wird, sodass insbesondere Nahrungsmittel an unterschiedlichen Zubereitungsorten mit im Wesentlichen gleicher Temperatur erhitzt werden, insbesondere gemäß einer zweiten, insbesondere homogenen, Temperaturzonenverteilung.

Insbesondere kann dabei die erste Temperaturzonenverteilung dann eingesetzt werden, wenn in Abhängigkeit von der Art des Lebensmittels (Nahrungsmittels) ein schonendes Erhitzen erforderlich ist. Weiter ist es denkbar, dass die unterschiedlichen Temperaturzonenverteilungen eingesetzt werden, wenn bspw. trotz unterschiedlicher Lebensmittelarten der Nahrungsmittel ein gleicher Fertigstellungszeitpunkt gewährleistet werden soll. Dabei wird insbesondere die zweite Temperaturzonenverteilung dann eingesetzt, wenn bei unterschiedlichen oder gleichen Nahrungsmitteln eine gleiche Erhitzung erfolgen soll, wobei sich hierzu die Temperaturen insbesondere maximal innerhalb eines bestimmten Bereiches unterscheiden dürfen. Die inhomogene Temperaturverteilung ist hingegen besonders zur Erzeugung von Hotspots geeignet.

Des Weiteren kann vorgesehen sein, dass zur Erzeugung einer vorgegebenen Temperaturverteilung für eine erste Temperaturzone eines ersten Zubereitungsortes ein erster Solltemperaturwert vorgesehen ist, und für eine zweite Temperaturzone eines zweiten Zubereitungsortes ein zweiter Solltemperaturwert vorgesehen ist, wobei die Antennenanordnung durch die wenigstens eine Aussendevorrichtung und/oder Kontrolleinheit derart angesteuert wird, dass die jeweiligen Temperaturzonen individuell in Bezug auf den jeweiligen Solltemperaturwert regelbar sind. Insbesondere erfolgt hierzu eine Regelung durch die Aussendevorrichtung und/oder Kontrolleinheit derart, dass die Temperatur in den Temperaturzonen, insbesondere trotz unterschiedlicher Nahrungsmittel, einen bestimmten Solltemperaturwert entspricht und/oder dass unterschiedliche Solltemperaturen, z. B. in Abhängigkeit des Nahrungsmittels, vorgegeben sind.

Gemäß einem weiteren Vorteil kann vorgesehen sein, dass ein Solltemperaturwert mindestens einer Temperaturzone ein vorgegebener Temperaturwert des Nahrungsmittels ist, welcher zur Regelung der Temperaturzonen mit einem gemessenen und/oder geschätzten Vergleichstemperaturwert des Nahrungsmittels verglichen wird, sodass bei der Zubereitung der Vergleichstemperaturwert maximal eine vorgegebene Abweichung von dem Solltemperaturwert aufweist. Zur Schätzung des Vergleichstemperaturwerts können bspw. statistische Methoden eingesetzt werden, sodass eine einfache Ermittlung des Vergleichstemperaturwerts möglich ist.

Nach einer weiteren Möglichkeit kann vorgesehen sein, dass ein erster Solltemperaturwert einer ersten Temperaturzone für ein erstes Nahrungsmittel und/oder an einem ersten Zubereitungsort von einem zweiten Solltemperaturwert einer zweiten Temperaturzone für ein zweites Nahrungsmittel und/oder an einem zweiten Zubereitungsort in Abhängigkeit von einer Voreinstellung und/oder einer Bedienereingabe abweicht (insbesondere zur inhomogenen Temperaturzonenverteilung) oder identisch ist (insbesondere zur homogenen Temperaturzonenverteilung). Somit lässt sich einfach die Temperaturzonenverteilung regulieren.

Weiter ist es denkbar, dass mindestens ein Antrieb für die Antennenanordnung und/oder für die jeweiligen Antennen vorgesehen ist. Hierdurch können die Antennen in einfacher Weise ausgerichtet werden.

Des Weiteren kann es möglich sein, dass die Aussendevorrichtung zumindest einen Hochfrequenz-Signalgeber und/oder zumindest einen Leistungsverstärker aufweist, sodass ein elektrisches Signal an die zumindest eine Antenne der Antennenanordnung ausgegeben werden kann, um den Betrieb der mindestens einen Antenne zu ermöglichen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine schematische Darstellung von Teilen eines erfindungsgemäßen Systems,
- Figur 2: eine weitere schematische Darstellung von Teilen eines erfindungsgemäßen Systems,
- Figur 3: eine weitere schematische Darstellung von Teilen eines erfindungsgemäßen Systems und
- Figur 4: eine weitere schematische Darstellung von Teilen eines erfindungsgemäßen Systems.

In den nachfolgenden Figuren werden für die gleichen technischen Merkmale auch von unterschiedlichen Ausführungsbeispielen die identischen Bezugszeichen verwendet.

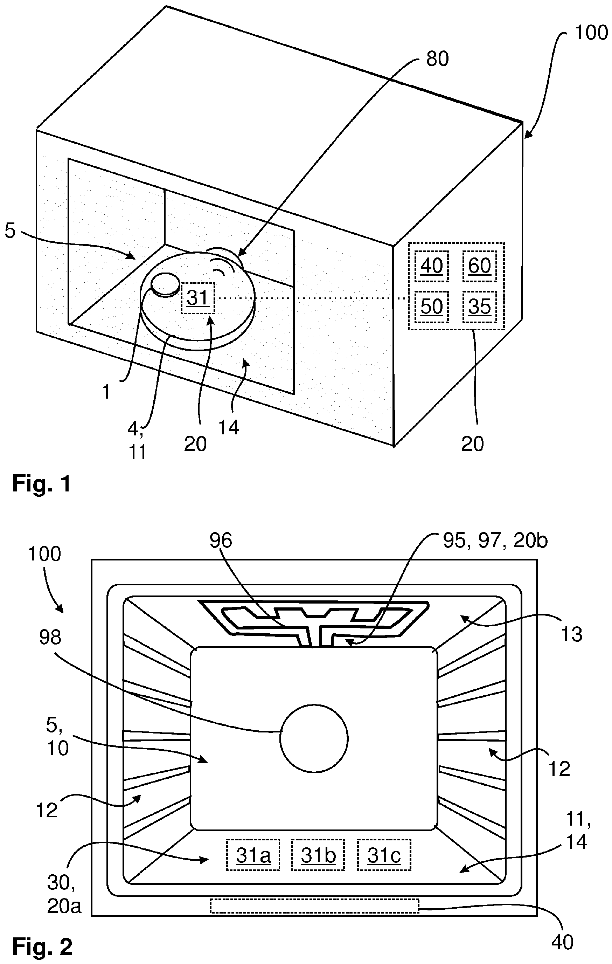

In den Figuren 1 bis 4 sind jeweils schematisch Teile eines erfindungsgemäßen Systems 100 gezeigt. In Figur 1 sind dabei die Teile des erfindungsgemäßen Systems 100 Teile einer Mikrowelle und in den Figuren 2 bis 4 sind die Teile des erfindungsgemäßen Systems 100 Teile eines Backofens. Selbstverständlich sind diese Ausbildungen rein beispielhaft, sodass auch weitere Ausführungsformen für das erfindungsgemäße System 100 denkbar sind.

In Figur 1 ist zu sehen, dass das erfindungsgemäße System 100 einen Nahrungsmittelträger 4 aufweist, sodass ein Zubereitungsort 5 für wenigstens ein Nahrungsmittel 1 bereitgestellt werden kann. Hierbei ist der Nahrungsmittelträger 4 als ein Bodenelement 11 ausgeführt. In diesem Bodenelement 11 kann eine Heizvorrichtung 20 angeordnet sein, welche wenigstens eine Antenne 31 aufweist und damit einer Antennenanordnung 30 entspricht. Alternativ oder zusätzlich kann die Antennenanordnung 30 und/oder eine weitere Antenne 31 auch in einem Boden 14 angeordnet sein. Die Antennenanordnung 30 dient dabei zur Energiezuführung von elektromagnetischer Energie 80 zu dem Zubereitungsort 5, wodurch das Nahrungsmittel 1 erhitzbar ist. Um dies zu bewirken umfasst die Heizvorrichtung 20 bzw. Antennenanordnung 30 auch zumindest einen Antrieb 35 und/oder zumindest eine Aussendevorrichtung 40 und/oder zumindest einen Leistungsverstärker 50 und/oder zumindest eine Kontrolleinheit 60.

Der Antrieb 35 dient dabei insbesondere zum Bewegen und damit zum Ausrichten der jeweiligen Antennen 31 der Antennenanordnung 30. Die Aussendevorrichtung 40, insbesondere ein Hochfrequenz-Signalgeber, dient insbesondere zum Betrieb der jeweiligen Antenne 31.

Wie in Figur 1 erkennbar ist, ist die zumindest eine Antenne 31 der Antennenanordnung 30 sehr nahe an dem Nahrungsmittel 1 angeordnet, sodass ein Energieverlust vermieden werden kann.

In Figur 2 ist eine Antennenanordnung 30, d. h. zumindest eine erste Antenne 31a und/oder eine zweite Antenne 31b und/oder eine dritte Antenne 31c, in einem Bodenelement 11 bzw. in einem Boden 14 eines Backofens angeordnet. Die erste Antenne 31a kann dabei bspw. als Monopolantenne, die zweite Antenne 31b kann bspw. als Dipolantenne und/oder die dritte Antenne kann bspw. als zirkularpolarisierte Antenne ausgeführt sein. Selbstverständlich ist auch denkbar, dass nur eine oder mehrere der jeweiligen ersten und/oder zweiten und/oder dritten Antennen 31a, 31b, 31c vorgesehen sind. Mit anderen Worten sind die erste(n) und zweite(n) und dritte(n) Antenne(n) 31a, 31b, 31c jeweils optional vorhanden, und insbesondere jeweils einzeln oder auch in größerer Anzahl vorhanden. Auch eine über der Fläche des Bodenelements 11 und/oder Bodens 14 verteilte Anordnung, z. B. matrizenförmig, der Antennen 31 ist denkbar. Zudem kann auch hier eine Aussendevorrichtung 40 vorgesehen sein, um die jeweiligen Antennen 31 zu betreiben.

Weiter ist in Figur 2 erkennbar, dass der Backofen und/oder das erfindungsgemäße System 100 zumindest ein Seitenelement 12 und/oder das Bodenelement 11 und/oder ein Deckenelement 13 und/oder den Boden 14 aufweist, welche zumindest teilweise insbesondere den Garraum 10 begrenzen und/oder bilden. Optional kann auch ein Grill 95 und/oder eine Heizspirale 96 und/oder eine Wärmequelle 97 und/oder ein Ventilator 98 vorgesehen sein. Der Grill 95 und/oder die Wärmequelle 97 und/oder die Heizspirale 96 kann dabei als zumindest zweite Heizvorrichtung 20b ausgeführt sein, wobei die Antennenanordnung 30 die erste Heizvorrichtung 20a bildet.

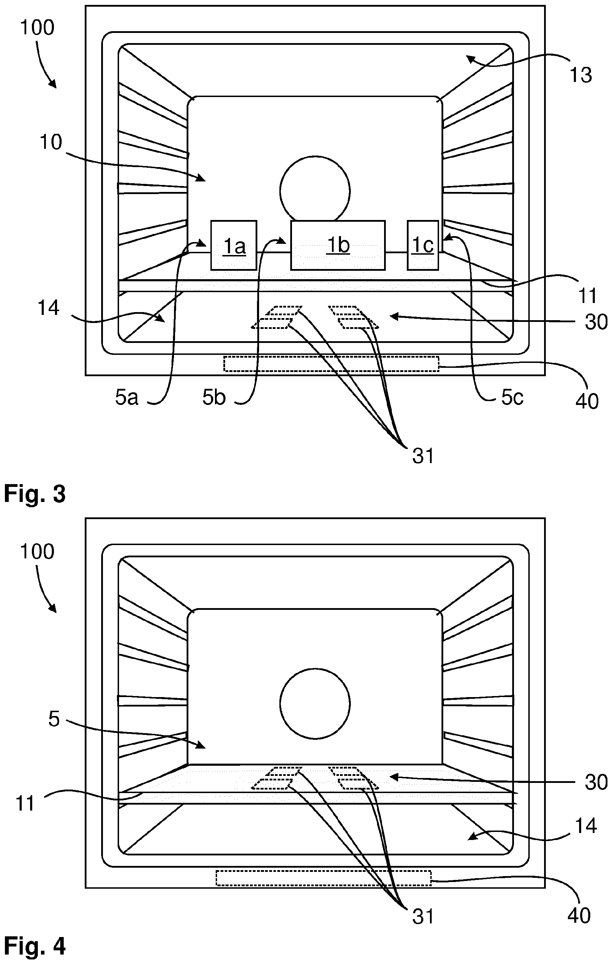

In Figur 3 und 4 ist erkennbar, dass auch ein vom Boden 14 separates Bodenelement 11 vorgesehen sein kann, um zumindest ein Nahrungsmittel 1 aufzunehmen. Beispielhaft sind in Figur 3 ein erstes Nahrungsmittel 1a an einem ersten Zubereitungsort 5a und ein zweites Nahrungsmittel 1b an einem zweiten Zubereitungsort 5b und ein drittes Nahrungsmittel 1c an einem dritten Zubereitungsort 5c gezeigt. Die Antennenanordnung 30 kann dabei bspw. zumindest eine Antenne 31 aufweisen, welche im Boden 14 integriert ist (s. Figur 3) und/oder im Bodenelement 11 integriert ist (s. Figur 4).

Dabei ist es denkbar, dass die Temperaturzonenverteilung im Garraum 10 derart erzeugt wird, dass die einzelnen Nahrungsmittel 1a, 1b, 1c gleichmäßig erhitzt werden, oder auch Hotspots für die jeweiligen oder eines der Nahrungsmittel 1 erzeugt werden. Durch die Hotspots kann bspw. erreicht werden, dass ein bestimmtes Nahrungsmittel 1 (z. B. nur das zweite Nahrungsmittel 1b) oder auch nur ein bestimmter Bereich des einzelnen Nahrungsmittels 1 (z. B. des zweiten Nahrungsmittels 1b) besonders stark erhitzt wird, d. h. die Temperaturverteilung in diesem Bereich konzentriert wird.

Die Erzeugung der Temperaturzonenverteilung und insbesondere die Veränderung der Temperaturzonenverteilung kann bspw. dadurch ermöglicht werden, dass die Antennenanordnung 30 veränderbar betreibbar und/oder veränderbar ausrichtbar ist. Die veränderbare Ausrichtung kann bspw. durch mindestens einen Antrieb 35 erfolgen, welcher die zumindest eine Antenne 31 bewegt, insbesondere rotiert. Der veränderbare Betrieb, z. B. gemäß mindestens einer Betriebsart, kann z. B. dadurch ermöglicht werden, dass die Aussendevorrichtung 40 die zumindest eine Antenne 31 mit unterschiedlichen elektrischen Signalen und/oder Frequenzen ansteuert.

### Bezugszeichenliste

- 1: Nahrungsmittel

- 1a: Erstes Nahrungsmittel
- 1b: Zweites Nahrungsmittel
- 1c: Drittes Nahrungsmittel
- 4: Nahrungsmittelträger
- 5: Zubereitungsort
- 5a: erster Zubereitungsort
- 5b: zweiter Zubereitungsort
- 5c: dritter Zubereitungsort

- 10: Garraum
- 11: Bodenelement
- 12: Seitenelement
- 13: Deckenelement
- 14: Boden

- 20: Heizvorrichtung
- 20a: erste Heizvorrichtung
- 20b: zweite Heizvorrichtung

- 30: Antennenanordnung
- 31: Antenne
- 31a: erste Antenne, Monopolantenne
- 31b: zweite Antenne, Dipolantenne
- 31c: dritte Antenne, zirkular polarisierte Antenne
- 35: Antrieb

- 40: Aussendevorrichtung, Hochfrequenz-Signalgeber
- 50: Leistungsverstärker

- 60: Kontrolleinheit

- 80: elektromagnetische Energie bzw. Strahlung

- 95: Grill
- 96: Heizspiralen
- 97: Wärmequelle
- 98: Ventilator

- 100: System

## Patentansprüche

1. System (100) zur Zubereitung von mindestens einem Nahrungsmittel (1), aufweisend:
- einen Garraum (10), in welchem mindestens ein Zubereitungsort (5) vorgesehen ist, wobei an dem mindestens einen Zubereitungsort (5) das mindestens eine Nahrungsmittel (1) zubereitbar ist,
- wenigstens eine Antennenanordnung (30) zur Energiezuführung von elektromagnetischer Energie (80) in den Garraum (10), wodurch das mindestens eine Nahrungsmittel (1) zur Zubereitung erhitzbar ist,
- wenigstens eine Aussendevorrichtung (40) zum Betreiben der Antennenanordnung (30),
wobei zumindest eine Antenne (31) der Antennenanordnung (30) in Abhängigkeit von dem mindestens einen Zubereitungsort (5) ausgerichtet ist und durch die Aussendevorrichtung (40) gemäß mindestens einer Betriebsart betreibbar ist, sodass eine leistungsoptimierte Temperaturzonenverteilung zur Erhitzung des Nahrungsmittels (1) erzeugbar ist, **dadurch gekennzeichnet, dass** der Betrieb von zumindest zwei Antennen (31) der Antennenanordnung (30) mit unterschiedlichen Betriebsarten erfolgt, welche sich hinsichtlich einer Leistung und/oder einer Frequenz und/oder einer zyklischen Ein- und Ausschaltung, mit welcher die jeweiligen Antennen (31) der Antennenanordnung (30) betrieben werden, unterscheiden, sodass eine vorgegebene Temperaturzonenverteilung erzeugt wird.

2. System (100) nach Anspruch 1,
**dadurch gekennzeichnet,**
**dass** die Temperaturzonenverteilung durch die Antennenanordnung (30) als eine dynamische Temperaturzonenverteilung erzeugbar ist, sodass die Temperaturzonenverteilung
- veränderbar ist und/oder
- an das wenigstens eine Nahrungsmittel (1) am Zubereitungsort (5) anpassbar ist und/oder
- an eine vorgegebene Temperaturzonenverteilung anpassbar ist,
insbesondere zur leistungsoptimierten, vorzugsweise homogenen, Erhitzung der jeweiligen Nahrungsmittel (1).

3. System (100) nach Anspruch 1 oder 2,
**dadurch gekennzeichnet,**
**dass** die Antennenanordnung (30) mindestens zwei Antennen (31) umfasst, welche beabstandet voneinander angeordnet sind, und welche durch die, insbesondere eine einzige, Aussendevorrichtung (40) oder jeweils durch separate Aussendevorrichtungen (40) betreibbar sind, wobei die Antennen (31) unterschiedlich ausgeführt sind, insbesondere jeweils unterschiedliche Ausrichtung aufweisen und/oder gemäß unterschiedlicher Betriebsart betreibbar sind und/oder gemäß unterschiedlicher Antennenbauform ausgebildet sind, wodurch die Temperaturzonenverteilung in Abhängigkeit von der unterschiedlichen Ausführung der Antennen (31) erzeugbar ist.

4. System (100) nach einem der vorhergehenden Ansprüche,
**dadurch gekennzeichnet,**
**dass** die Antennenanordnung (30) zumindest eine erste Antenne (31a) und eine zweite Antenne (31b) aufweist, welche beabstandet voneinander angeordnet sind, wobei insbesondere die jeweilige Antenne (31) als wenigstens eine der nachfolgenden Antennenbauformen ausgeführt ist:
- als eine Dipolantenne (31b), vorzugsweise bei welcher eine Richtcharakteristik abhängig ist von einer Stromverteilung über eine Länge eines elektrischen Leiters der Dipolantenne (31 b),
- als eine Monopolantenne (31a), insbesondere Stabantenne, vorzugsweise bei welcher eine um eine vertikale Achse der Monopolantenne (31a) rotationssymmetrische Feldverteilung erfolgt,
- als eine zirkular polarisierte Antenne (31c), welche insbesondere als ein Kreuzdipol ausgeführt ist und/oder eine Anordnung mit zwei Antennenteilen aufweist, welche um 90° versetzt angeordnet und/oder um 90° phasenverschoben speisbar und/oder linear polarisiert betreibbar sind.

5. System (100) nach einem der vorhergehenden Ansprüche,
**dadurch gekennzeichnet,**
**dass** die wenigstens eine Antenne (31) der Antennenanordnung (30) als eine Kupferantenne ausgeführt ist und/oder
**dass** die Antennenanordnung (30) eine Vielzahl von Antennen (31) aufweist, sodass durch die Antennen (31) eine feingranulare Temperaturverteilung bewirkbar ist, wobei vorzugsweise mindestens 3 oder mindestens 5 oder mindestens 10 oder mindestens 20 Antennen (31) vorgesehen sind.

6. System (100) nach einem der vorhergehenden Ansprüche,
**dadurch gekennzeichnet,**
**dass** zumindest zwei verschiedene Zubereitungsorte (5) im Garraum (10) vorgesehen sind, und verschiedene Antennen (31) der Antennenanordnung (30) derart angeordnet, insbesondere ausgerichtet, und/oder betreibbar sind, dass den verschiedenen Zubereitungsorten (5) ein unterschiedliches Ausmaß Energie zuführbar ist, sodass Nahrungsmittel (1) an den jeweiligen Zubereitungsorten (5) kontrolliert erhitzbar sind, insbesondere jeweils gleichmäßig oder in vorbestimmter Weise erhitzbar sind.

7. System (100) nach einem der vorhergehenden Ansprüche,
**dadurch gekennzeichnet,**
**dass** das System (100) ein Deckenelement (13) und ein Bodenelement (11) umfasst, wobei das Bodenelement (11) dem Deckenelement (13) gegenüberliegend angeordnet ist, und vorzugsweise der Garraum (10) zumindest teilweise durch das Bodenelement (11) und durch das Deckenelement (13) begrenzt wird, und wobei die Antennenanordnung (30) im Bereich des Bodenelements (11) angeordnet ist, vorzugsweise unterhalb des Bodenelements (11), wobei das Bodenelement (11) zwischen der Antennenanordnung (30) und dem Garraum (10) angeordnet ist
und/oder
**dass** ein Bodenelement (11) des Systems (100) zumindest teilweise nichtmetallisch ausgebildet ist und/oder für die elektromagnetische Energie (80), insbesondere elektromagnetische Strahlung (80), durchdringbar ausgeführt ist,
vorzugsweise sodass die elektromagnetische Energie (80) ausgehend von der Antennenanordnung (30) durch das Bodenelement (11) in den Garraum (10) gelangen kann, wobei vorzugsweise das Bodenelement (11) überwiegend Keramik und/oder Glas aufweist und/oder daraus hergestellt ist.

8. System (100) nach einem der vorhergehenden Ansprüche,
**dadurch gekennzeichnet,**
**dass** die Antennenanordnung (30) einen geringeren Abstand zum Zubereitungsort (5) aufweist als ein Deckenelement (13) des Systems (100), wobei vorzugsweise der Abstand zwischen der Antennenanordnung (30) und dem Zubereitungsort (5) maximal 1 cm oder maximal 4 cm oder maximal 6 cm oder maximal 10 cm beträgt, und bevorzugt die Antennenanordnung (30) als eine erste Heizvorrichtung (20a) einen geringeren Abstand zum Zubereitungsort (5) aufweist als weitere Heizvorrichtungen (20) des Systems (100), insbesondere sodass Reflektionen und/oder Streuungen der elektromagnetischen Energie (80) aufgrund des geringen Abstands bis zum Auftreffen auf das Nahrungsmittel (1) reduzierbar sind und/oder
**dass** neben der Antennenanordnung (30) eine weitere Heizvorrichtung (20) vorgesehen ist, vorzugsweise im Bereich eines Deckenelements (13) des Systems (100), wobei die weitere Heizvorrichtung (20) wenigstens eine Heizspirale (96) und/oder Elektroheizung (96) umfasst, welche insbesondere am Deckenelement (13) befestigt ist.

9. System (100) nach einem der vorhergehenden Ansprüche,
**dadurch gekennzeichnet,**
**dass** das System (100) als Ofen, insbesondere Backofen, oder Mikrowelle ausgeführt ist.

10. Verfahren zur Zubereitung von wenigstens einem Nahrungsmittel (1), wobei in einem Garraum (10) an mindestens einem Zubereitungsort (5) das wenigstens eine Nahrungsmittel (1) zubereitet wird,
**dadurch gekennzeichnet,**
**dass** für die Zubereitung des wenigstens einen Nahrungsmittels (1) zumindest die nachfolgenden Schritte vorgesehen sind:
a) Ausrichten zumindest einer Antenne (31) einer Antennenanordnung (30) in Abhängigkeit von dem mindestens einen Zubereitungsort (5),
b) Betreiben der Antenne (31) gemäß mindestens einer Betriebsart durch wenigstens eine Aussendevorrichtung (40), sodass elektromagnetische Energie (80) in den Garraum (10) zugeführt wird,
wodurch eine leistungsoptimierte Temperaturzonenverteilung zur Erhitzung des Nahrungsmittels (1) erzeugt wird, wobei
der Betrieb von zumindest zwei Antennen (31) der Antennenanordnung (30) mit unterschiedlichen Betriebsarten erfolgt, welche sich hinsichtlich einer Leistung und/oder einer Frequenz und/oder einer zyklischen Ein- und Ausschaltung, mit welcher die jeweiligen Antennen (31) der Antennenanordnung (30) betrieben werden, unterscheiden, sodass eine vorgegebene Temperaturzonenverteilung erzeugt wird.

11. Verfahren nach einem der vorhergehenden Ansprüche,
**dadurch gekennzeichnet,**
**dass** die elektromagnetische Energie (80) eine hochfrequente elektromagnetische Strahlung (80) im Mikrowellenbereich und/oder in einem Frequenzbereich ist, welcher zur Erhitzung von Nahrungsmitteln (1) geeignet ist.

12. Verfahren nach einem der vorhergehenden Ansprüche,
**dadurch gekennzeichnet,**
**dass** zumindest zwei verschiedene Zubereitungsorte (5) vorgesehen sind, und verschiedene Antennen (31) der Antennenanordnung (30) derart angeordnet, insbesondere ausgerichtet, und/oder betrieben werden, dass den verschiedenen Zubereitungsorten (5) jeweils ein unterschiedliches Ausmaß an Energie zugeführt wird, wobei die jeweiligen unterschiedlichen Ausmaße der Energie in Abhängigkeit von Bedingungen, welche für die Nahrungsmittel (1) an den jeweiligen Zubereitungsorten (5) spezifisch sind, derart reguliert werden, dass die Nahrungsmittel (1) gemäß einer Vorgabe, insbesondere gleichmäßig, erhitzt werden können.

13. Verfahren nach einem der vorhergehenden Ansprüche,
**dadurch gekennzeichnet,**
**dass** der Betrieb von zumindest zwei Antennen (31) der Antennenanordnung (30) mit den unterschiedlichen Betriebsarten erfolgt, welche sich hinsichtlich der Leistung und/oder der Frequenz und/oder der zyklischen Ein- und Ausschaltung, mit welcher die jeweiligen Antennen (31) der Antennenanordnung (30) betrieben werden, unterscheiden, sodass die vorgegebene Temperaturzonenverteilung erzeugt wird, nämlich mit einer homogenen oder inhomogenen Temperaturverteilung und/oder
**dass** der Betrieb der Antennenanordnung (30) durch eine Kontrolleinheit (60) angepasst wird, sodass in Abhängigkeit von Bedingungen, welche durch die Kontrolleinheit (60) ausgewertet werden, eine vorgegebene Temperaturzonenverteilung erzeugt wird.

14. Verfahren nach einem der vorhergehenden Ansprüche,
**dadurch gekennzeichnet,**
**dass** zur Erzeugung einer vorgegebenen Temperaturzonenverteilung die Energiezuführung für unterschiedliche Zubereitungsorte (5) des Garraums (10) unterschiedlich durchgeführt wird, sodass
- zumindest zwei unterschiedliche Temperaturzonen mit unterschiedlichen Temperaturen im Garraum (10) für unterschiedliche Zubereitungsorte (5) bewirkt werden, sodass insbesondere Nahrungsmittel (1) an unterschiedlichen Zubereitungsorten (5) ungleichmäßig erhitzt werden, insbesondere gemäß einer ersten, insbesondere inhomogenen, Temperaturzonenverteilung, oder
- eine einzige Temperaturzone für eine homogene Temperaturverteilung im Garraum (10) bewirkt wird, sodass insbesondere Nahrungsmittel (1) an unterschiedlichen Zubereitungsorten (5) mit im Wesentlichen gleicher Temperatur erhitzt werden, insbesondere gemäß einer zweiten, insbesondere homogenen, Temperaturzonenverteilung
und/oder
**dass** zur Erzeugung einer vorgegebenen Temperaturverteilung für eine erste Temperaturzone eines ersten Zubereitungsortes (5a) ein erster Solltemperaturwert vorgesehen ist, und für eine zweite Temperaturzone eines zweiten Zubereitungsortes (5b) ein zweiter Solltemperaturwert vorgesehen ist, wobei die Antennenanordnung (30) durch die wenigstens eine Aussendevorrichtung (40) und/oder Kontrolleinheit (60) derart angesteuert wird, dass die jeweiligen Temperaturzonen individuell in Bezug auf den jeweiligen Solltemperaturwert regelbar sind.

15. Verfahren nach einem der vorhergehenden Ansprüche,
**dadurch gekennzeichnet,**
**dass** ein Solltemperaturwert mindestens einer Temperaturzone ein vorgegebener Temperaturwert für das Nahrungsmittel (1) ist, welcher zur Regelung der wenigstens einen Temperaturzone mit einem gemessenen und/oder geschätzten Vergleichstemperaturwert des Nahrungsmittels (1) verglichen wird, sodass bei der Zubereitung der Vergleichstemperaturwert maximal eine vorgegebene Abweichung von dem Solltemperaturwert aufweist und/oder
**dass** ein erster Solltemperaturwert einer ersten Temperaturzone für ein erstes Nahrungsmittel (1) von einem zweiten Solltemperaturwert einer zweiten Temperaturzone für ein zweites Nahrungsmittel (1a, 1b) in Abhängigkeit von einer Voreinstellung und/oder einer Bedienereingabe abweicht oder identisch ist und/oder
**dass** ein System (100) nach einem der vorhergehenden Ansprüche betrieben wird.

## Claims

1. System (100) for preparing at least one foodstuff (1), comprising:
- a cooking chamber (10) in which at least one preparation site (5) is provided, wherein the at least one foodstuff (1) can be prepared at the at least one preparation site (5),
- at least one antenna arrangement (30) for energy supply of electromagnetic energy (80) into the cooking chamber (10), whereby the at least one foodstuff (1) can be heated for preparation,
- at least one transmitting device (40) for operating the antenna arrangement (30),
wherein at least one antenna (31) of the antenna arrangement (30) is aligned depending on the at least one preparation site (5) and can be operated by the transmitting device (40) according to at least one operating mode so that a power-optimized temperature zone distribution can be generated for heating the foodstuff (1), **characterized in that**
the operation of at least two antennas (31) of the antenna arrangement (30) is carried out with different operating modes which differ with respect to a power and/or a frequency and/or a cyclic on/off switching with which the respective antennas (31) of the antenna arrangement (30) are operated, so that a predetermined temperature zone distribution is generated.

2. System (100) according to claim 1,
**characterized in that**
the temperature zone distribution can be generated by the antenna arrangement (30) as a dynamic temperature zone distribution so that the temperature zone distribution
- can be changed and/or
- can be adapted to the at least one foodstuff (1) at the preparation site (5) and/or
- can be adapted to a predetermined temperature zone distribution,
in particular for a power-optimized, preferably homogeneous, heating of the respective foodstuff (1).

3. System (100) according to claim 1 or 2,
**characterized in that**
the antenna arrangement (30) comprises at least two antennas (31) which are arranged at a distance from one another and which can be operated by the, in particular a single, transmitting device (40) or respectively by separate transmitting devices (40), wherein the antennas (31) are of different design, in particular each having a different orientation and/or being operable according to a different operating mode and/or being designed according to a different antenna design, as a result of which the temperature zone distribution can be generated depending on the different design of the antennas (31).

4. System (100) according to one of the previous claims,
**characterized in that**
the antenna arrangement (30) comprises at least a first antenna (31a) and a second antenna (31b) which are arranged at a distance from one another, wherein the respective antenna (31) is in particular designed as at least one of the following antenna designs:
- as a dipole antenna (31b), preferably in which a directional characteristic is dependent on a current distribution over a length of an electrical conductor of the dipole antenna (31b),
- as a monopole antenna (31a), in particular a rod antenna, preferably in which a field distribution occurs which is rotationally symmetrical about a vertical axis of the monopole antenna (31a),
- as a circularly polarized antenna (31c), which is designed in particular as a cross dipole and/or comprises an arrangement with two antenna parts, which are arranged offset by 90° and/or can be fed with a phase shift of 90° and/or can be operated with linear polarization.

5. System (100) according to one of the previous claims,
**characterized in that**
the at least one antenna (31) of the antenna arrangement (30) is designed as a copper antenna and/or
the antenna arrangement (30) comprises a plurality of antennas (31), so that a fine-granular temperature distribution can be caused by the antennas (31), wherein preferably at least 3 or at least 5 or at least 10 or at least 20 antennas (31) are provided.

6. System (100) according to one of the previous claims,
**characterized in that**
at least two different preparation sites (5) are provided in the cooking chamber (10), and different antennas (31) of the antenna arrangement (30) are arranged, in particular aligned, and/or operable in such a way that a different amount of energy can be supplied to the different preparation sites (5), so that foodstuffs (1) can be heated in a controlled manner at the respective preparation sites (5), in particular wherein they can be heated uniformly or in a predetermined manner respectively.

7. System (100) according to one of the previous claims,
**characterized in that**
the system (100) comprises a cover element (13) and a base element (11), wherein the base element (11) is arranged opposite the cover element (13), and preferably the cooking chamber (10) is at least partially limited by the base element (11) and by the cover element (13), and wherein the antenna arrangement (30) is arranged in the region of the base element (11), preferably below the base element (11), wherein the base element (11) is arranged between the antenna arrangement (30) and the cooking chamber (10) and/or
a base element (11) of the system (100) is at least partially non-metallic and/or is designed to be permeable to electromagnetic energy (80), in particular electromagnetic radiation (80),
preferably so that the electromagnetic energy (80) can pass from the antenna arrangement (30) through the base element (11) into the cooking chamber (10), wherein preferably the base element (11) predominantly comprises and/or is made of ceramic and/or glass.

8. System (100) according to one of the previous claims,
**characterized in that**
the antenna arrangement (30) is at a shorter distance from the preparation site (5) than a cover element (13) of the system (100), preferably wherein the distance between the antenna arrangement (30) and the preparation site (5) is at most 1 cm or at most 4 cm or at most 6 cm or at most 10 cm, and preferably wherein the antenna arrangement (30) as a first heating device (20a) is at a shorter distance from the preparation site (5) than other heating devices (20) of the system (100), in particular so that reflections and/or scattering of the electromagnetic energy (80) can be reduced due to the short distance until it strikes the foodstuff (1) and/or
a further heating device (20) is provided in addition to the antenna arrangement (30), preferably in the region of a cover element (13) of the system (100), wherein the further heating device (20) comprises at least one heating coil (96) and/or electric heating (96), which is fixed in particular to the cover element (13).

9. System (100) according to one of the previous claims,
**characterized in that**
the system (100) is designed as an oven, in particular a baking oven, or microwave oven.

10. Method for preparing at least one foodstuff (1), wherein the at least one foodstuff (1) is prepared in a cooking chamber (10) at at least one preparation site (5),
**characterized in that**
at least the following steps are provided for the preparation of the at least one foodstuff (1):
a) aligning at least one antenna (31) of an antenna arrangement (30) depending on the at least one preparation site (5),
b) operating the antenna (31) according to at least one operating mode by at least one transmitting device (40) so that electromagnetic energy (80) is supplied to the cooking chamber (10),
whereby a power-optimized temperature zone distribution is generated for heating the foodstuff (1), wherein
the operation of at least two antennas (31) of the antenna arrangement (30) is carried out with different operating modes which differ with respect to a power and/or a frequency and/or a cyclic on/off switching with which the respective antennas (31) of the antenna arrangement (30) are operated, so that a predetermined temperature zone distribution is generated.

11. Method according to one of the preceding claims,
**characterized in that**
the electromagnetic energy (80) is a high-frequency electromagnetic radiation (80) in the microwave range and/or in a frequency range which is suitable for heating foodstuffs (1).

12. Method according to one of the preceding claims,
**characterized in that**
at least two different preparation sites (5) are provided, and different antennas (31) of the antenna arrangement (30) are arranged, in particular aligned, and/or operated in such a way that the different preparation sites (5) are each supplied with a different amount of energy, wherein the respective different amounts of energy are regulated depending on conditions which are specific to the foodstuffs (1) at the respective preparation sites (5) in such a way that the foodstuffs (1) can be heated, in particular uniformly, according to a specification.

13. Method according to one of the preceding claims,
**characterized in that**
the operation of at least two antennas (31) of the antenna arrangement (30) is carried out with the different operating modes, which differ with respect to the power and/or the frequency and/or the cyclic on/off switching with which the respective antennas (31) of the antenna arrangement (30) are operated, so that the predetermined temperature zone distribution is generated, namely with a homogeneous or inhomogeneous temperature distribution and/or
the operation of the antenna arrangement (30) is adapted by a control unit (60) so that a predetermined temperature zone distribution is generated depending on conditions which are evaluated by the control unit (60).

14. Method according to one of the preceding claims,
**characterized in that**
in order to produce a predetermined temperature zone distribution, the energy supply for different preparation sites (5) of the cooking chamber (10) is carried out differently, so that
- at least two different temperature zones with different temperatures are caused in the cooking chamber (10) for different preparation sites (5), so that in particular foodstuffs (1) are heated non-uniformiy at different preparation sites (5), in particular according to a first, in particular inhomogeneous, temperature zone distribution, or
- a single temperature zone is caused for a homogeneous temperature distribution in the cooking chamber (10), so that in particular foodstuffs (1) are heated at substantially the same temperature at different preparation sites (5), in particular according to a second, in particular homogeneous, temperature zone distribution
and/or
a first set point temperature value is provided for generating a predetermined temperature distribution for a first temperature zone of a first preparation site (5a), and a second set point temperature value is provided for a second temperature zone of a second preparation site (5b), wherein the antenna arrangement (30) is controlled by the at least one transmitting device (40) and/or control unit (60) in such a way that the respective temperature zones can be regulated individually with respect to the respective set point temperature value.

15. Method according to one of the preceding claims,
**characterized in that**
a set point temperature value of at least one temperature zone is a predetermined temperature value for the foodstuff (1), which is compared with a measured and/or estimated comparison temperature value of the foodstuff (1) in order to regulate the at least one temperature zone, so that during preparation the comparison temperature value comprises at most a predetermined deviation from the set point temperature value, and/or a first set point temperature value of a first temperature zone for a first foodstuff (1) differs from a second set point temperature value of a second temperature zone for a second foodstuff (1a, 1b) depending on a presetting and/or an operator input or is identical, and/or a system (100) is operated according to one of the preceding claims.

## Revendications

1. Système (100) de préparation d'au moins un produit alimentaire (1), comprenant :
- une chambre de cuisson (10) dans laquelle est prévu au moins un emplacement de préparation (5), dans laquelle le au moins un produit alimentaire (1) peut être préparé sur le au moins un emplacement de préparation (5),
- au moins un arrangement d'antennes (30) pour l'alimentation en énergie électromagnétique (80) de la chambre de cuisson (10), ce qui permet de chauffer le au moins un produit alimentaire (1) pour la préparation,
- au moins un dispositif d'émission (40) pour faire fonctionner l'arrangement d'antennes (30)
dans lequel au moins une antenne (31) de l'arrangement d'antennes (30) est orientée en fonction de l'au moins un emplacement de préparation (5) et peut être fonctionnée par le dispositif d'émission (40) selon au moins un mode de fonctionnement, de sorte qu'une distribution des zones de température optimisée en puissance peut être générée pour chauffer le produit alimentaire (1), **caractérisé en ce que**
le fonctionnement d'au moins deux antennes (31) de l'arrangement d'antennes (30) est effectué avec des modes de fonctionnement différents qui se distinguent par une puissance et/ou une fréquence et/ou une mise en / hors service cyclique avec lesquels les antennes respectives (31) de l'arrangement d'antennes (30) sont fonctionnées, de sorte qu'une distribution des zones de température prédéterminée est générée.

2. Système (100) selon la revendication 1,
**caractérisé en ce que**
la distribution des zones de température peut être générée par l'arrangement d'antennes (30) comme une distribution des zones de température dynamique, de sorte que la distribution des zones de température
- peut être modifié et/ou
- peut être adaptée à l'au moins un produit alimentaire (1) sur l'emplacement de préparation (5) et/ou
- peut être adaptée à une distribution des zones de température donnée,
en particulier pour un chauffage optimisé en puissance, de préférence homogène, des produits alimentaire respectives (1).

3. Système (100) selon la revendication 1 ou 2,
**caractérisé en ce que**
l'arrangement d'antennes (30) comprend au moins deux antennes (31) disposées à distance l'une de l'autre, qui peuvent être fonctionnées par le dispositif d'émission (40), en particulier unique, ou par des dispositifs d'émission (40) respectivement séparés, les antennes (31) étant de conception différente, en particulier chacune ayant une orientation différente et/ou pouvant fonctionner selon un mode de fonctionnement différent et/ou étant conçues selon une conception d'antenne différente, de sorte que la distribution des zones de température peut être générée en fonction de la conception différente des antennes (31).

4. Système (100) selon l'une des revendications précédentes,
**caractérisé en ce que**
l'arrangement d'antennes (30) présente au moins une première antenne (31a) et une deuxième antenne (31b) qui sont disposées à distance l'une de l'autre, l'antenne (31) respective étant en particulier conçue comme au moins l'une des conceptions d'antennes suivantes :
- comme une antenne dipôle (31b), de préférence dans laquelle une caractéristique directionnelle dépend d'une distribution de courant sur une longueur d'un conducteur électrique de l'antenne dipôle (31b),
- comme une antenne unipolaire (31a), en particulier une antenne tige, dans laquelle se produit de préférence une distribution de champ à symétrie de rotation autour d'un axe vertical de l'antenne unipolaire (31a),
- comme une antenne à polarisation circulaire (31c), qui est conçue en particulier comme un dipôle croisé et/ou présente un arrangement avec deux parties d'antenne, qui sont disposées de manière décalée de 90° et/ou peuvent être alimentées avec un déphasage de 90° et/ou peuvent être fonctionnées avec une polarisation linéaire.

5. Système (100) selon l'une des revendications précédentes,
**caractérisé en ce que**
la au moins une antenne (31) de l'arrangement d'antennes (30) est conçue comme une antenne en cuivre et/ou
l'arrangement d'antennes (30) a une pluralité d'antennes (31), de sorte qu'une distribution de température à grain fin peut être obtenue par les antennes (31), de préférence au moins 3 ou au moins 5 ou au moins 10 ou au moins 20 antennes (31) étant prévues.

6. Système (100) selon l'une des revendications précédentes,
**caractérisé par en ce qu'**
au moins deux emplacements de préparation (5) différents sont prévus dans la chambre de cuisson (10), et différentes antennes (31) de l'arrangement d'antennes (30) sont disposées, en particulier orientées, et/ou peuvent être fonctionnées de telle sorte qu'une quantité d'énergie différente peut être amenée aux différents emplacements de préparation (5), de sorte que des produits alimentaire (1) peuvent être chauffées de manière contrôlée sur les emplacements de préparation (5) respectifs, en particulier peuvent être chauffées de manière uniforme ou d'une manière prédéterminée dans chaque cas.

7. Système (100) selon l'une des revendications précédentes,
**caractérisé en ce que**
le système (100) comprend un élément de plafond (13) et un élément de plancher (11), l'élément de plancher (11) étant disposé en face de l'élément de plafond (13), et de préférence la chambre de cuisson (10) étant au moins partiellement délimitée par l'élément de plancher (11) et par l'élément de plafond (13), et l'arrangement d'antennes (30) étant disposé dans la zone de l'élément de plancher (11), de préférence sous l'élément de plancher (11), l'élément de plancher (11) étant disposé entre l'arrangement d'antennes (30) et la chambre de cuisson (10)
et/ou
un élément de plancher (11) du système (100) est au moins partiellement non métallique et/ou est conçu pour être perméable à l'énergie électromagnétique (80), en particulier au rayonnement électromagnétique (80),
de préférence pour que l'énergie électromagnétique (80) puisse passer de l'arrangement d'antennes (30) à travers l'élément de plancher (11) dans la chambre de cuisson (10), l'élément de plancher (11) comprenant ou étant de préférence constitué principalement de céramique et/ou de verre.

8. Système (100) selon l'une des revendications précédentes,
**caractérisé en ce que**
l'arrangement d'antennes (30) a une distance plus petite de l'emplacement de préparation (5) qu'un élément de plafond (13) du système (100), la distance entre l'arrangement d'antennes (30) et l'emplacement de préparation (5) étant de préférence de 1 cm au maximum ou de 4 cm au maximum ou de 6 cm au maximum ou de 10 cm au maximum, et de préférence l'arrangement d'antennes (30) comme premier dispositif de chauffage (20a) est à une distance plus petite de l'emplacement de préparation (5) que les autres dispositifs de chauffage (20) du système (100), en particulier de sorte que les réflexions et/ou la diffusion de l'énergie électromagnétique (80) puissent être réduites en raison de la petite distance jusqu'à ce qu'elle touche le produit alimentaire (1) et/ou en ce qu'un autre dispositif de chauffage (20) est prévu en plus du l'arrangement d'antennes (30), de préférence dans la zone d'un élément de plafond (13) du système (100), l'autre dispositif de chauffage (20) comprenant au moins un serpentin chauffant (96) et/ou un chauffage électrique (96), qui est fixé en particulier à l'élément de plafond (13).

9. Système (100) selon l'une des revendications précédentes,
**caractérisé en ce que**
le système (100) est conçu comme un four, en particulier un four de cuisson, ou un four à micro-ondes.

10. Procédé de préparation d'au moins un produit alimentaire (1), dans lequel le au moins un produit alimentaire (1) est préparé dans une chambre de cuisson (10) à au moins un emplacement de préparation (5),
**caractérisé en ce qu'**
au moins les étapes suivantes sont prévues pour la préparation du au moins un produit alimentaire (1) :
a) aligner au moins une antenne (31) d'un arrangement d'antennes (30) en fonction d'au moins un emplacement de préparation (5),
b) faire fonctionner l'antenne (31) selon au moins un mode de fonctionnement par au moins un dispositif d'émission (40) de sorte que l'énergie électromagnétique (80) soit fournie à la chambre de cuisson (10),
par laquelle une distribution des zones de température optimisée en puissance est générée pour chauffer le produit alimentaire (1), dans laquelle
le fonctionnement d'au moins deux antennes (31) de l'arrangement d'antennes (30) est effectué avec des modes de fonctionnement différents qui se distinguent par une puissance et/ou une fréquence et/ou une mise en / hors service cyclique avec lesquels les antennes respectives (31) de l'arrangement d'antennes (30) sont fonctionnées, de sorte qu'une distribution des zones de température prédéterminée est générée.

11. Procédé selon l'une des revendications précédentes,
**caractérisé en ce que**
l'énergie électromagnétique (80) est un rayonnement électromagnétique à haute fréquence (80) dans la gamme des micro-ondes et/ou dans une gamme de fréquences qui convient au chauffage des produits alimentaire (1).

12. Procédé selon l'une des revendications précédentes,
**caractérisé en ce qu'**
au moins deux emplacements de préparation (5) différents sont prévus et que différentes antennes (31) de l'arrangement d'antennes (30) sont disposées, en particulier orientées, et/ou fonctionnées de telle sorte que les différents emplacements de préparation (5) sont alimentés chacun avec une quantité d'énergie différente, les différentes quantités d'énergie respectives étant réglées en fonction des conditions qui sont spécifiques aux produits alimentaire (1) sur les emplacements de préparation (5) respectifs de telle sorte que les produits alimentaire (1) peuvent être chauffées, en particulier de manière uniforme, selon une spécification.

13. Procédé selon l'une des revendications précédentes,
**caractérisé en ce que**
le fonctionnement d'au moins deux antennes (31) de l'arrangement d'antennes (30) est effectué avec les différents modes de fonctionnement, qui se distinguent par la puissance et/ou la fréquence et/ou la mise en / hors service cyclique avec lesquels les antennes (31) respectives de l'arrangement d'antennes (30) sont fonctionnées, de sorte qu'une distribution des zones de température prédéterminée est générée, à savoir avec une distribution de température homogène ou non homogène et/ou en ce que le fonctionnement de l'arrangement d'antennes (30) est adapté par une unité de commande (60) de sorte qu'une distribution des zones de température prédéterminée est générée en fonction des conditions qui sont évaluées par l'unité de commande (60).

14. Procédé selon l'une des revendications précédentes,
**caractérisé en ce que**
pour produire une distribution des zones de température prédéterminée, l'alimentation en énergie des différents emplacements de préparation (5) de la chambre de cuisson (10) est effectuée différemment, de sorte que
- au moins deux zones de température différentes avec des températures différentes sont réalisées dans la chambre de cuisson (10) pour différents emplacements de préparation (5), de sorte que en particulier les produits alimentaire (1) sont chauffées de manière inégale aux différents emplacements de préparation (5), en particulier selon une première distribution des zones de température, en particulier inhomogène, ou
- une seule zone de température est réalisée pour une distribution de température homogène dans la chambre de cuisson (10), de sorte que les produits alimentaire (1) en particulier sont chauffées à une température sensiblement identique en différents emplacements de préparation (5), en particulier selon une deuxième distribution des zones de température, en particulier homogène,
et/ou
**en ce qu'**une première valeur de température cible est prévue pour la génération d'une distribution de température prédéterminée pour une première zone de température d'un premier emplacement de préparation (5a), et une deuxième valeur de température cible est prévue pour une deuxième zone de température d'un deuxième emplacement de préparation (5b), l'arrangement d'antennes (30) étant commandé par le au moins un dispositif d'émission (40) et/ou une unité de commande (60) de telle sorte que les zones de température respectives peuvent être commandées individuellement par rapport à la valeur de température cible respective.

15. Procédé selon l'une des revendications précédentes,
**caractérisé en ce qu'**
une valeur de température cible d'au moins une zone de température est une valeur de température prédéterminée pour le produit alimentaire (1), qui est comparée à une valeur de température de comparaison mesurée et/ou estimée du produit alimentaire (1) afin de contrôler la au moins une zone de température, de sorte que pendant la préparation la valeur de température de comparaison présente au maximum un écart prédéterminé par rapport à la valeur de température cible, et/ou
**en ce qu'**une première valeur de température cible d'une première zone de température pour un première produit alimentaire (1) diffère d'une deuxième valeur de température cible d'une deuxième zone de température pour un deuxième produit alimentaire (1a, 1b) en fonction d'un préréglage et/ou d'une entrée de l'opérateur ou est identique, et/ou qu'un système (100) est fonctionné selon l'une des revendications précédentes.
